# EUROPÄISCHE PATENTSCHRIFT

(11) **EP 2 321 615 B1**
(45) Veröffentlichungstag und Bekanntmachung des Hinweises auf die Patenterteilung: **28.11.2012**
(21) Anmeldenummer: 09782327.2
(22) Anmeldetag: 28.08.2009
(51) Int. Cl.: G01B 11/00

(54) **OPTISCHER SENSOR MIT KOLLISIONSSCHUTZ FÜR EINE MESSMASCHINE**
OPTICAL SENSOR WITH COLLISION PROTECTION FOR A MEASUREMENT MACHINE
CAPTEUR OPTIQUE AVEC PROTECTION ANTICOLLISION POUR UNE MACHINE DE MESURE

(30) Priorität: 05.09.2008 EP 08163827
(43) Veröffentlichungstag der Anmeldung: 18.05.2011
(73) Patentinhaber: Leica Geosystems AG, 9435 Heerbrugg (CH)
(72) Erfinder: JENSEN, Thomas, CH-9400 Rorschach (CH); SAUPE, Frank, CH-9327 Tübach (CH); VULLIOUD, Benjamin, CH-1124 Gollion (CH)
(74) Vertreter: Kaminski Harmann
(86) Internationale Anmeldenummer: PCT/EP2009/061128
(87) Internationale Veröffentlichungsnummer: WO 2010/026105

(56) Entgegenhaltungen:
- EP-A- 0 362 625
- DE-B3-102007 008 361
- US-A- 4 177 568

## Beschreibung

Die Erfindung betrifft einen optischen Sensor mit Kollisionsschutz für eine Messmaschine, insbesondere für eine Koordinatenmessmaschine, das einen sensorseitigen Kupplungsteil zur mechanischen und optischen Verbindung mit der Messmaschine und ein Sensorelement umfasst.

Es ist im Stand der Technik bekannt, taktile, aber nicht optische, Sensoren für Koordinatenmessmaschinen mit einem Kollisionsschutz auszustatten. Beispielsweise geht aus der EP 0 426 492 A2 ein taktiler Sensor hervor, der zur kontinuierlichen Vermessung von Werkstücken vorgesehen ist und ein Sensorelement aufweist, das durch Rückstellkräfte in einer Gleichgewichtsposition gehalten wird. Die Rückstellkräfte werden durch Federn bewirkt. Das Sensorelement wird vorzugsweise magnetisch an einer Sensorhalterung über Präzisionslager gehalten, wobei die Rückstellkräfte auf die Sensorhalterung wirken.

Im Gegensatz zu diesem taktilen Sensor wird ein optischer Sensor berührungslos an der Oberfläche eines zu vermessenden Werkstücks vorbeigeführt. Es besteht daher keine Notwendigkeit, den Sensor über Rückstellkräfte in einer Gleichgewichtsposition zu halten. Vielmehr wird ein optischer Sensor an der Sensorhalterung spielfrei befestigt.

Aus der US 5,404,649 geht ein weiterer taktiler Sensor für eine Koordinatenmessmaschine hervor. Der Sensor wird durch einen Magneten an einer Sensoraufnahme gehalten. Zwischen dem Sensor und der Sensoraufnahme ist eine isostatische Dreipunktauflage vorgesehen. Die Kupplung zwischen dem Sensor und der Sensoraufnahme ist derart gestaltet, dass der Sensor bei einer Kollision mit einem Werkstück aus einer Ausgangsposition heraus verlagert wird und aufgrund der magnetischen Anziehungskräfte in seine Ausgangsposition zurückschnappt, wenn der Sensor wieder frei ist, sei es weil er zurückverlagert wurde oder weil das Werkstück entfernt wurde.

Anders als bei kontaktierenden Sensoren weisen optische Sensoren gegenüber mechanischer Beanspruchung empfindliche Lichtwellenleiter auf, die im Sensor geführt werden müssen. Nachteilig an der Kupplung der US 5,404,649 ist die zentrale Anordnung des Magneten, der eine schonende Führung des Lichtwellenleiters erschwert.

Gegenüber den bekannten kontaktierenden Sensoren ergeben sich für einen optischen Sensor neue Problemstellungen durch den Lichtwellenleiter und die Tatsache, dass das Sensorelement im normalen Betrieb nicht in Kontakt mit zu vermessenden Werkstücken steht.

EP 0 362 625 A2 beschreibt einen optischen Sensor mit Kollisionsschutz für eine Koordinatenmessmaschine, der einen sensorseitigen Kupplungsteil zur mechanischen und optischen Verbindung mit der Messmaschine und ein Sensorelement umfasst. Der Sensor weist eine Sensorschutzkupplung als Kollisionsschutz mit einem messmaschinenseitigen Kupplungsteil und einem sensorelementseitigen Kupplungsteil auf, wobei ein Lichtwellenleiter zwischen den Kupplungsteilen der Sensorschutzkupplung geführt ist. Die Sensorschutzkupplung ist ein Dreipunktlager.

Ausgehend vom Stand der Technik liegt der Erfindung die Aufgabe zugrunde, einen optischen Sensor aufzuzeigen, der bei einer Kollision mit einem Werkstück nicht beschädigt wird und der sich durch eine lange Lebensdauer auszeichnet. Ferner soll der Sensor einfach austauschbar sein.

Diese Aufgabe wird durch einen optischen Sensor mit den Merkmalen von Patentanspruch 1 gelöst. Vorteilhafte Ausführungsformen des optischen Sensors gehen aus den abhängigen Ansprüchen 2 bis 12 hervor.

Erfindungsgemäß weist der optische Sensor eine Sensorschutzkupplung als Kollisionsschutz mit einem messmaschinenseitigen Kupplungsteil und einem sensorelementseitigen Kupplungsteil auf. Ein Lichtwellenleiter ist zwischen den Kupplungsteilen der Sensorschutzkupplung geführt. Ein Lichtwellenleiterschutzelement umgibt den Lichtwellenleiter.

Im Unterschied zu kontaktierenden taktilen Sensoren werden optische Sensoren an dem zu vermessenden Werkstück berührungslos vorbeigeführt und es wird der Abstand zwischen dem optischen Sensor und dem Werkstück optisch, insbesondere interferometrisch, gemessen. Aus diesem Grund weist weder der Sensor noch die Aufnahme des Sensors in der Messmaschine Kraftsensoren auf, die etwaige Auslenkungen des Sensorelements infolge des Kontaktes des Sensors mit dem Werkstück detektieren. Der optische Sensor ist daher im Falle einer seitlichen Kollision mit dem Werkstück weitgehend schutzlos, bzw. es kann zumindest nicht festgestellt werden, ob der Sensor mit dem Werkstück kollidiert ist.

Um hier Abhilfe zu schaffen, wurde der erfindungsgemäße Kollisionsschutz geschaffen, bei dem im Sensor selbst eine Sensorschutzkupplung vorgesehen ist, anstelle einer an der Übergangsstelle vom Sensor zur Sensorhalterung an der Messmaschine vorgesehenen Schutzkupplung. Durch die Sensorschutzkupplung kann sich das Sensorelement vom messmaschinenseitigen Kupplungsteil im Falle einer Kollision ablösen, bevor es zu einer Beschädigung des Sensorelements kommt.

Da bei optischen Sensoren zwischen dem Sensorelement und einer Steuereinheit der Koordinatenmessmaschine ein empfindlicher Lichtwellenleiter zu verlegen ist, ist dieser im Innern des Sensors, d.h. zwischen den Kupplungsteilen der Sensorschutzkupplung geführt. Weiterhin ist vorgesehen, dass der Lichtwellenleiter von einem Lichtwellenleiterschutzelement umgeben ist.

Das Lichtwellenleiterschutzelement ist endseitig an den Kupplungsteilen der Sensorschutzkupplung befestigt. Dies stellt sicher, dass sich das Sensorelement im Falle einer Ablösung nicht beliebig weit vom messmaschinenseitigen Kupplungsteil entfernen kann. Aus räumlichen Gründen ist die Distanz, um die der Lichtwellenleiter aus dem messmaschinenseitigen Kupplungsteil herausziehbar ist, begrenzt. Durch ein beidendig an den jeweiligen Kupplungsteilen befestigtes Lichtwellenleiterschutzelement wird der Lichtwellenleiter vor übermäßig starken Zugbelastungen geschützt.

Mithin wird durch den Kollisionsschutz die Lebensdauer des optischen Sensors vorteilhaft verlängert. Durch die Trennung von Austauschkupplung und Sensorschutzkupplung wird zudem der Austausch des optischen Sensors erleichtert.

Um zu verhindern, dass der optische Sensor von der Koordinatenmessmaschine weiter verfahren wird, nachdem es zu einer Ablösung des Sensorelements gekommen ist, kann ein Ablösesensor zwischen den Kupplungsteilen der Sensorschutzkupplung vorgesehen werden, der vorzugsweise mit der Steuereinheit der Koordinatenmessmaschine gekoppelt ist.

Der Ablösesensor kann induktiv, kapazitiv, optisch oder als elektrischer Pin-Kontakt ausgeführt sein. Auf diese Weise kann eine Ablösung elektrisch erfasst werden, so dass das weitere Verfahren des Sensors durch die Koordinatenmessmaschine im Kollisionsfall schnell gestoppt werden kann.

Zweckmäßigerweise weist ein Kupplungsteil der Sensorschutzkupplung wenigstens einen Magnet, vorzugsweise einen Elektromagnet, auf. Durch den Magnet wird das Sensorelement am messmaschinenseitigen Kupplungsteil sicher im eingekuppelten Zustand gehalten. Wenn es zu einer Kollision des optischen Sensors mit einem Werkstück kommt, kann das Sensorelement ausgelenkt werden und sich vom messmaschinenseitigen Kupplungsteil ablösen. Sollte der optische Sensor wieder in eine freie Position verfahren werden, kann sich der optische Sensor wieder einkuppeln, d.h. die magnetischen Anziehungskräfte ziehen den sensorelementseitigen Kupplungsteil wieder in den eingekuppelten Zustand zurück. Ein weiterer Vorteil von Elektromagneten ist, dass diese leichter als Permanentmagnete sind. Vorteilhaft wirkt sich zudem aus, dass die optischen Messungen der Messmaschine durch die (elektro-)magnetischen Felder nicht beeinflusst werden.

In einer weiteren Ausführungsform weist der Kupplungsteil drei Magnete auf, die bezogen auf die Längsachse des Sensors um Winkel von 120° versetzt angeordnet sind. Diese Anordnung kann vorteilhaft in Verbindung mit einer isostatischen Dreipunktlagerung zwischen den Kupplungsteilen vorgesehen sein. Auf diese Weise wird das Sensorelement sicher und äußerst präzise am messmaschinenseitigen Kupplungsteil gehalten.

Noch vorteilhafter ist es, wenn der Kupplungsteil einen Ringmagnet aufweist. Der Ringmagnet bewirkt, dass das Sensorelement in jeder Richtung vom messmaschinenseitigen Kupplungsteil gleichmäßig abgelöst werden kann.

Das Lichtwellenleiterschutzelement kann ein Faltenbalg sein. Der Faltenbalg kann insbesondere aus Gummi sein. Der Faltenbalg schützt den Lichtwellenleiter vor zu starken mechanischen Beanspruchungen, insbesondere Biegebeanspruchungen, und Feuchtigkeit.

In einer anderen Ausführungsform ist das Lichtwellenleiterschutzelement eine unter Zug vorgespannte Feder. Die Feder hat die Vorteile, dass sie auch als Alternative zur magnetischen Befestigung des Sensorelements am messmaschinenseitigen Kupplungsteil eingesetzt werden kann und im Falle einer Biegebeanspruchung Knickbelastungen des Lichtwellenleiters verhindert.

Es ist aber auch vorstellbar, parallel zu der magnetischen Kopplung der Kupplungsteile eine Druckfeder vorzusehen. Nachdem es nach einer Kollision zu einer Ablösung des Sensorelements gekommen ist und das Sensorelement sich so weit vom messmaschinenseitigen Kupplungsteil entfernt hat, dass die Anziehungskraft des Magneten nachlässt, drückt die Druckfeder das Sensorelement vom messmaschinenseitigen Kupplungsteil weg, um das Risiko einer Beschädigung des Sensorelements weiter zu reduzieren.

Vorzugsweise ist die Sensorschutzkupplung selbsttätig wieder einkuppelnd ausgeführt. Auf diese Weise kehrt das Sensorelement in seine Ausgangsposition zurück nachdem eine Kollision aufgetreten ist und es wieder frei ist, zum Beispiel durch Verfahren des optischen Sensors in entgegengesetzter Richtung. Mithin können die Messungen anschließend ohne einen weiteren Eingriff von außen fortgesetzt werden. Allerdings ist hierbei darauf zu achten, dass das Lichtwellenleiterschutzelement ausreichend steif und die Distanz, um die der Lichtwellenleiter aus dem messmaschinenseitigen Kupplungsteil herausgezogen wurde, nicht zu lang ist, damit es beim Einkuppeln sensorelementseitigen Kupplungsteils nicht zu einer Beschädigung des Lichtwellenleiters kommt. Vorzugsweise sind bei dieser Ausführungsform Elektromagnete vorgesehen, damit das Einkuppeln kontrolliert erfolgen kann.

Die Kupplungsteile der Sensorschutzkupplung können weiterhin über eine Dreipunktlagerung aneinander anliegen. Durch die Dreipunktlagerung wird eine besonders präzise Halterung des Sensorelements an dem messmaschinenseitigen Kupplungsteil bereitgestellt.

Die Auskopplung eines optischen Messstrahls aus dem Sensorelement kann axial oder, durch zusätzliche optische Elemente wie z.B. Prismen, auch seitlich (90°) bzw. ringförmig erfolgen.

Für interferometrische Messverfahren ist der Lichtwellenleiter vorzugsweise als monomodige Faser mit einem Schutzmantel, einem so genannten Buffer, ausgelegt. Andere Messverfahren wie zum Beispiel die chromatisch konfokale Messung benötigen eher eine multimodige Faser.

Je nach Auslegung der Optik im Sensorelement kann der Messstrahl kollimiert oder zur genauen lateralen Abtastung des Objektes auch fokussiert sein. Speziell bei chromatisch konfokalen Messverfahren verfügt die Optik im Sensorelement über eine wellenlängenabhängige Fokuslage, um später aus der Einkopplungseffizienz des vom Objekt rückgestreuten Signals auf die Objektdistanz schließen zu können.

Für interferometrische Messverfahren bietet sich die Einbringung einer definierten Referenzebene innerhalb des optischen Sensors an, vorzugsweise in Form einer Reflexion von einer der Optikflächen, um auf diese Weise einen kleinen Abstand zwischen Referenz- und Objektebene zu erlangen, der dann der gemessenen Distanz entspricht. Auf diese Weise lassen sich Umwelteinflüsse minimieren. Ein solches Messverfahren ist auch als Common Path Interferometry bekannt.

Die Erfindung ist nachfolgend anhand von in den Figuren dargestellten Ausführungsbeispielen näher erläutert. Es zeigen:
- Fig. 1: einen optischen Sensor im eingekuppelten Zustand im Querschnitt entlang der Linie A-A in Figur 7;
- Fig. 2: den optischen Sensor im ausgekuppelten Zustand im Querschnitt entlang der Linie A-A in Figur 7;
- Fig. 3 und 4: perspektivische Ansichten des optischen Sensors im ausgekuppelten Zustand;
- Fig. 5 und 6: perspektivische Ansichten des optischen Sensors im eingekuppelten Zustand;
- Fig. 7: eine Draufsicht auf den optischen Sensor;
- Fig. 8 und 9: eine Ausführungsform des optischen Sensors mit einem Lichtwellenleiterschutzelement in Form einer Feder; und
- Fig. 10 bis 12: eine Ausführungsform des optischen Sensors mit Ringmagneten.

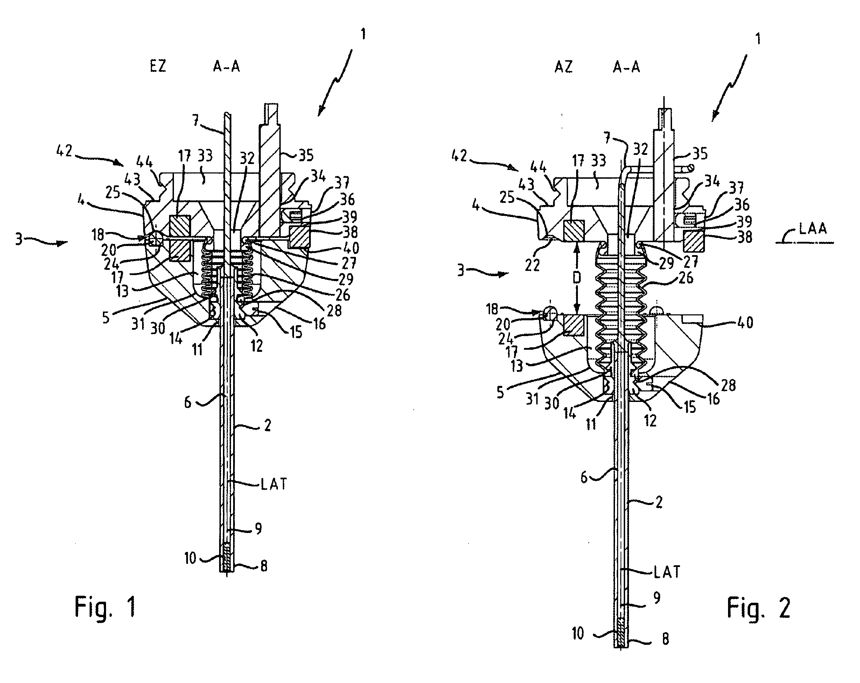

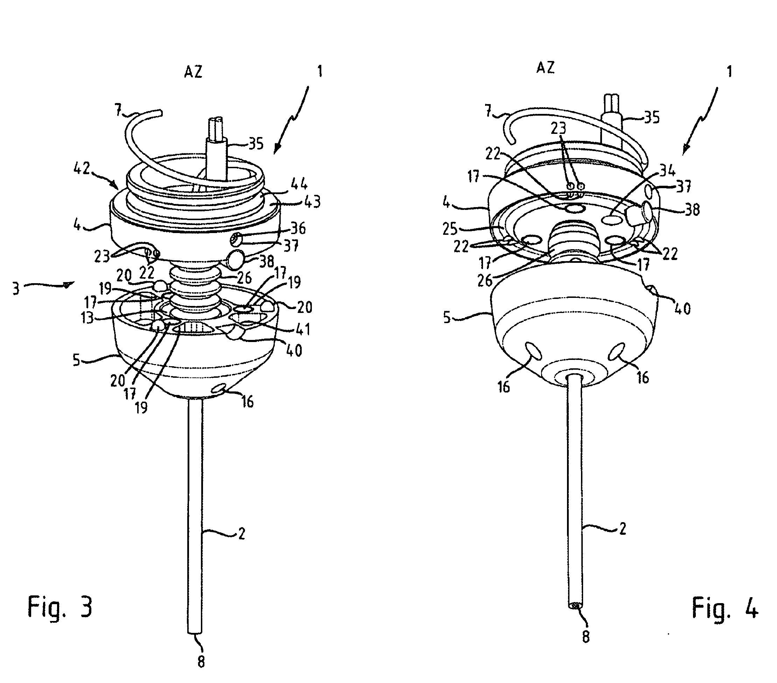

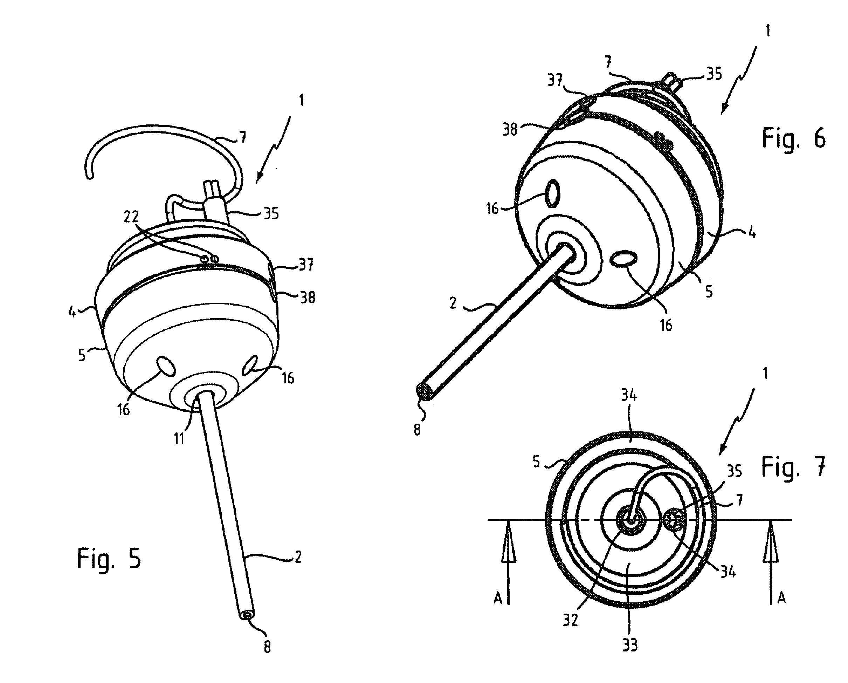

In den Figuren 1 bis 7 ist ein optischer Sensor 1 für eine Messmaschine, insbesondere für eine Koordinatenmessmaschine, gemäß einer ersten Ausführungsform ausschnittsweise dargestellt. Der Sensor 1 weist ein Sensorelement 2 und eine Sensorschutzkupplung 3 auf. Die Sensorschutzkupplung 3 gliedert sich in einen messmaschinenseitigen Kupplungsteil 4 und einen sensorelementseitigen Kupplungsteil 5.

Das Sensorelement 2 ist stabförmig ausgebildet und innen hohl. Im Innern 6 des Sensorelements 2 ist ein Lichtwellenleiter 7 angeordnet. Der Lichtwellenleiter 7 erstreckt sich ausgehend von einem freien Ende 8 des Sensorelements 2 durch die Sensorschutzkupplung 3 bis zu einer nicht näher dargestellten Steuereinheit der Koordinatenmessmaschine. An das Ende 9 des Lichtwellenleiters 7 im Sensorelement 2 ist eine Linse 10, insbesondere einen Gradientenindexlinse, angesetzt, um eine Aufweitung des Strahlquerschnitts gegenüber dem Lichtwellenleiter 7 zu bewirken. Diese Linse 10 befindet sich vollständig im Innern 6 des Sensorelements 2 und schließt mit dem freien Ende 8 des Sensorelements 2 ab.

Das Sensorelement 2 ragt durch eine Axialbohrung 11 in den sensorelementseitigen Kupplungsteil 5 hinein und ist in einer Buchse 12 im sensorelementseitigen Kupplungsteil 5 gefasst. Die Buchse 12 ist in einer Ausnehmung 13 im sensorelementseitigen Kupplungsteil 5 angeordnet. Die Buchse 12 weist eine umlaufende dreieckige Kerbe 14 auf, in die Madenschrauben 15 eingreifen. Die Madenschrauben 15 sind in drei Gewindebohrungen 16 des Kupplungsteils 5 eingeschraubt, die zueinander um Winkel von 120° um die Längsachse LAT des Sensors 1 versetzt angeordnet sind.

Zur Kopplung des sensorelementseitigen Kupplungsteils 5 mit dem messmaschinenseitigen Kupplungsteil 4 sind Magnete 17 und eine isostatische Dreipunktlagerung 18 vorgesehen, welche im sensorelementseitigen Kupplungsteil 5 auf drei Stegen 19 angeordnet sind, die ebenfalls zueinander Winkel von 120° um die Längsachse LAT des Sensors 1 aufweisen. In radialer Richtung nach außen sind zunächst in beiden Kupplungsteilen 4, 5 zylindrische Magnete 17 vorgesehen. An diese schließt sich die Dreipunktlagerung 18 an. Die Dreipunktlagerung 18 weist im sensorelementseitigen Kupplungsteil 5 Kugeln 20 auf. Die Kugeln 20 gelangen an Zylinderstiften 22 im messmaschinenseitigen Kupplungsteil 4 zur Anlage, wobei jeder Kugel 20 jeweils zwei parallele und beabstandet angeordnete Zylinderstifte 22 zugeordnet sind. Die Zylinderstifte 22 sind in Passbohrungen 23 im messmaschinenseitigen Kupplungsteil 4 eingepresst oder eingeklebt. Zur Aufnahme der Kugeln 20 im sensorelementseitigen Kupplungsteil 5 ist eine zylinderförmige Aufnahme 24 in den Kupplungsteil 5 gefräst. Um eine einwandfreie Anlage der Kugeln 20 an den Zylinderstiften 22 zu gewährleisten, ist im messmaschinenseitigen Kupplungsteil 4 eine umlaufende Mulde 25 vorgesehen.

Zum Schutz des Lichtwellenleiters 7 ist ein den Lichtwellenleiter 7 umgebendes Lichtwellenleiterschutzelement 26 in Form eines Faltenbalges in die Sensorschutzkupplung 3 eingebaut. Der Faltenbalg 26 ist an seinen Enden 27, 28 über Lippen 29, 30 an der Buchse 12 und am messmaschinenseitigen Kupplungsteil 4 geschoben. Im eingekuppelten Zustand EZ der Sensorschutzkupplung 3, wie in Fig. 1 gezeigt, befindet sich der Faltenbalg 26 fast vollständig in der Ausnehmung 13 im sensorelementseitigen Kupplungsteil 5. Diese Ausnehmung 13 verjüngt sich in der Bildebene am unteren Ende 31 bogenförmig.

Der messmaschinenseitige Kupplungsteil 4 weist eine zentrale Bohrung 32 auf, die in vertikaler Richtung nach oben trichterförmig verbreitert ist und in eine breite zylinderförmige Aufnahme 33 mündet. Der Lichtwellenleiter 7 ist durch die Bohrung 32 geführt, aber nicht am messmaschinenseitigen Kupplungsteil 4 befestigt. Auf diese Weise kann der Lichtwellenleiter 7 im Falle einer Ablösung (Übergang in den ausgekuppelten Zustand AZ) durch den messmaschinenseitigen Kupplungsteil 4 gezogen werden, wenn sich der sensorelementseitige Kupplungsteil 5 vom messmaschinenseitigen Kupplungsteil 4 um die Distanz D entfernt. Der Lichtwellenleiter 7 ist oberhalb des messmaschinenseitigen Kupplungsteils 4 wendelförmig geführt.

Der messmaschinenseitige Kupplungsteil 4 weist ferner eine exzentrische Axialbohrung 34 im Bereich der zylinderförmigen Aufnahme 33 auf. In diese Axialbohrung 34 ist ein Ablösesensor 35 eingeführt. Der Ablösesensor 35 ist durch eine Madenschraube 36, die in eine radiale Gewindebohrung 37 eingeschraubt ist, im messmaschinenseitigen Kupplungsteil 4 fixiert, kann jedoch alternativ auch eingeklebt werden. Die Längsachse des Ablösesensors 35 erstreckt sich in radialer Richtung.

Die beiden Kupplungsteile 4, 5 werden durch einen Ausrichtungszylinder 38 vorzentriert und gegen Verdrehung geschützt. Der Ausrichtungszylinder 38 ist in einer halbzylindrischen Aufnahme 39 gehalten, insbesondere in diese geklebt. Die Längsachse des Ausrichtungszylinders 38 erstreckt sich in radialer Richtung. Im eingekuppelten Zustand EZ der Sensorschutzkupplung 3 ragt der Ausrichtungszylinder 38 in eine weitere halbzylindrische Ausnehmung 40 im sensorelementseitigen Kupplungsteil 5 hinein, die in einem vierten Steg 41 angeordnet ist.

Der optische Sensor 1 weist weiterhin ein nicht näher dargestelltes Aufnahmeteil auf, das über eine Standardaufnahme an einem bewegbaren Messarm der Messmaschine austauschbar befestigbar ist. Der messmaschinenseitige Kupplungsteil 4 ist über einen Befestigungsflansch 42 am Aufnahmeteil befestigbar. Hierzu weist der messmaschinenseitige Kupplungsteil 4 einen doppelt gestuften Absatz 43 und eine umlaufende dreieckförmige Kerbe 44 auf.

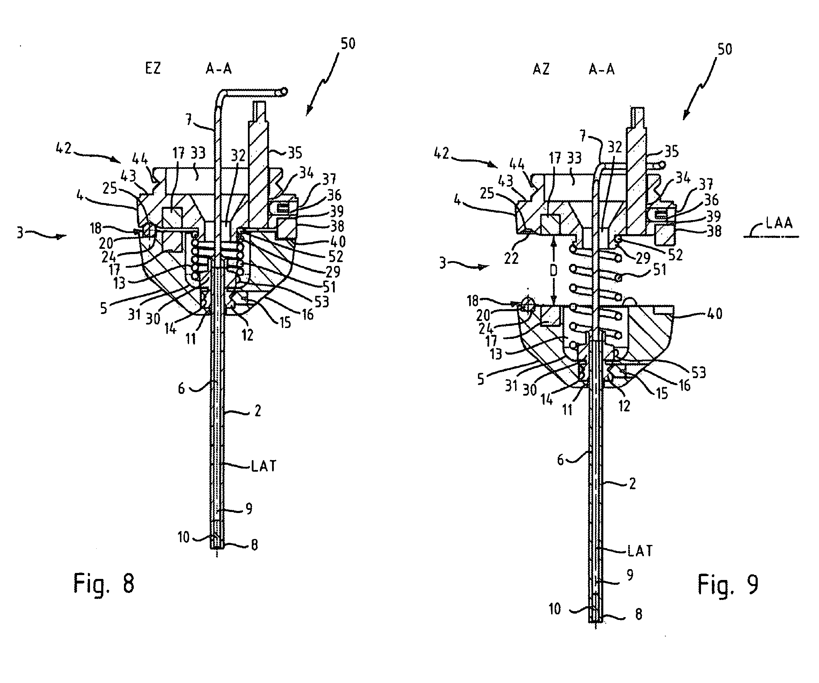

In den Figuren 8 und 9 ist eine Ausführungsform des optischen Sensors 50 dargestellt, die sich von der vorherigen Ausführungsform dadurch unterscheidet, dass das Lichtwellenleiterschutzelement 51 eine unter Zug vorgespannte Feder ist. Die Feder 51 ist an ihren Enden 52, 53 an Lippen 29, 30 der Kupplungsteile 4, 5 befestigt. Durch die Feder 51 ist die Distanz D, um welche sich der sensorelementseitige Kupplungsteil 5 bei einer Ablösung vom messmaschinenseitigen Kupplungsteil 4 entfernen kann, begrenzt. Die vorgespannte Feder 51 hält zudem den sensorelementseitigen Kupplungsteil 5 im eingekuppelten Zustand EZ, so dass diese Ausführungsform ohne Magnete auskommt.

Im Übrigen sind gleiche Merkmale in den Figuren 8 und 9 mit identischen Bezugszeichen versehen.

Gemäß einer weiteren nicht dargestellten Ausführungsform eines optischen Sensors ist die Feder 51 von einem Faltenbalg 26 umgeben.

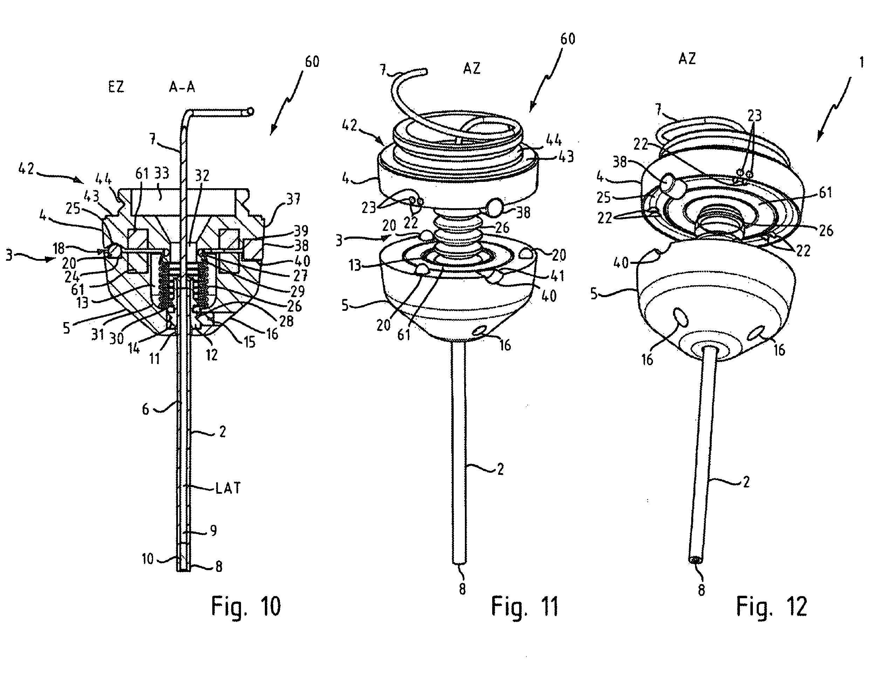

In den Figuren 10 bis 12 ist eine Ausführungsform des optischen Sensors 60 dargestellt, die sich von der Ausführungsform der Figuren 1 bis 7 dadurch unterscheidet, dass die Magnete 61, 62 als Ringmagnete ausgeführt sind. Dadurch sind die Stege und der Ablösesensor mit der dazugehörigen Bohrung und Befestigungsschraube weggefallen.

Im Übrigen sind gleiche Merkmale in den Figuren 10 bis 12 mit identischen Bezugszeichen versehen.

### Bezugszeichenliste

1 - Sensor
2 - Sensorelement
3 - Sensorschutzkupplung
4 - messmaschinenseitiger Kupplungsteil
5 - sensorelementseitiger Kupplungsteil
6 - Inneres von 2
7 - Lichtwellenleiter
8 - Ende von 2
9 - Ende von 7
10 - Linse
11 - Axialbohrung
12 - Buchse
13 - Ausnehmung
14 - Kerbe
15 - Madenschraube
16 - Gewindebohrung
17 - Magnet
18 - Dreipunktlagerung
19 - Steg
20 - Kugel
22 - Zylinderstift
23 - Passbohrung
24 - Aufnahme
25 - Mulde
26 - Lichtwellenleiterschutzelement, speziell Faltenbalg
27 - Ende von 26
28 - Ende von 26
29 - Lippe
30 - Lippe
31 - Ende von 13
32 - Bohrung
33 - Aufnahme

In den Figuren 8 und 9 ist eine Ausführungsform des optischen Sensors 50 dargestellt, die sich von der
34 - Axialbohrung
35 - Ablösesensor
36 - Madenschraube
37 - Gewindebohrung
38 - Ausrichtungszylinder
39 - halbzylindrische Aufnahme
40 - halbzylindrische Aufnahme
41 - Steg
42 - Befestigungsflansch
43 - Absatz
44 - Kerbe
50 - Sensor
51 - Lichtwellenleiterschutzelement, speziell Feder
52 - Ende von 51
53 - Ende von 51
60 - Sensor
61 - Ringmagnet
62 - Ringmagnet

AZ - ausgekuppelter Zustand
D - Distanz
EZ - eingekuppelter Zustand
LAA - Längsachse von 38
LAT - Längsachse von 1

## Patentansprüche

1. Optischer Sensor mit Kollisionsschutz für eine Messmaschine, insbesondere für eine Koordinatenmessmaschine, der einen sensorseitigen Kupplungsteil zur mechanischen und optischen Verbindung mit der Messmaschine und ein Sensorelement (2) umfasst, **dadurch gekennzeichnet, dass** der Sensor eine Sensorschutzkupplung (3) als Kollisionsschutz mit einem messmaschinenseitigen Kupplungsteil (4) und einem sensorelementseitigen Kupplungsteil (5) aufweist, wobei ein Lichtwellenleiter (7) zwischen den Kupplungsteilen (4, 5) der Sensorschutzkupplung (3) geführt ist und ein Lichtwellenleiterschutzelement (26, 51) den Lichtwellenleiter (7) umgibt, wobei die Enden (27, 28, 52, 53) des Lichtwellenleiterschutzelements (26, 51) an den zugeordneten Kupplungsteilen (4, 5) der Sensorschutzkupplung (3) befestigt sind.

2. Sensor nach dem vorhergehenden Anspruch, **dadurch gekennzeichnet, dass** die Sensorschutzkupplung (3) einen Ablösesensor (35) umfasst.

3. Sensor nach Anspruch 2, **dadurch gekennzeichnet, dass** der Ablösesensor (35) induktiv, kapazitiv, optisch oder als elektrischer Pin-Kontakt ausgeführt ist.

4. Sensor nach einem der vorhergehenden Ansprüche, **dadurch gekennzeichnet, dass** ein Kupplungsteil (4, 5) der Sensorschutzkupplung (3) wenigstens einen Magneten (17), vorzugsweise einen Elektromagneten, aufweist.

5. Sensor nach Anspruch 4, **dadurch gekennzeichnet, dass** der Kupplungsteil (4, 5) drei Magnete (17) aufweist, die bezogen auf die Längsachse (LAT) des Sensors um Winkel von 120° versetzt angeordnet sind.

6. Sensor nach Anspruch 4, **dadurch gekennzeichnet, dass** der Kupplungsteil (4, 5) einen Ringmagnet (61, 62) aufweist.

7. Sensor nach einem der Ansprüche 1 bis 6, **dadurch gekennzeichnet, dass** das Lichtwellenleiterschutzelement ein Faltenbalg (26) ist.

8. Sensor nach einem der Ansprüche 1 bis 6, **dadurch gekennzeichnet, dass** das Lichtwellenleiterschutzelement eine unter Zug vorgespannte Feder (51) ist.

9. Sensor nach einem der Ansprüche 6 bis 8, **dadurch gekennzeichnet, dass** die Sensorschutzkupplung (3) selbsttätig wieder einkuppelnd ausgeführt ist.

10. Sensor nach einem der vorhergehenden Ansprüche, **dadurch gekennzeichnet, dass** die Kupplungsteile (4, 5) der Sensorschutzkupplung (3) über eine Dreipunktlagerung (18) aneinander anliegen.

11. Sensor nach einem der Ansprüche 1 bis 10, **dadurch gekennzeichnet, dass** der Lichtwellenleiter (7) eine monomodige Faser ist.

12. Sensor nach einem der Ansprüche 1 bis 10, **dadurch gekennzeichnet, dass** der Lichtwellenleiter (7) eine multimodige Faser ist.

## Claims

1. Optical sensor with collision protection for a measurement machine, in particular for a coordinate measurement machine, which has a sensor-side coupling part for mechanical and optical connection to the measurement machine and has a sensor element (2), **characterized in that** the sensor has a sensor protection coupling (3) as collision protection with a coupling part (4) on the measurement machine side and a coupling part (5) on the sensor element side, wherein an optical waveguide (7) is routed between the coupling parts (4, 5) of the sensor protection coupling (3), and an optical waveguide protection element (26, 51) surrounds the optical waveguide (7), wherein the ends (27, 28, 52, 53) of the optical waveguide protection element (26, 51) are attached to the associated coupling parts (4, 5) of the sensor protection coupling (3).

2. Sensor according to the preceding claim, **characterized in that** the sensor protection coupling (3) has a release sensor (35).

3. Sensor according to claim 2, **characterized in that** the release sensor (35) is designed to be inductive, capacitive, optical or in the form of an electrical pin contact.

4. Sensor according to any one of the preceding claims, **characterized in that** a coupling part (4, 5) of the sensor protection coupling (3) has at least one magnet (17), preferably an electromagnet.

5. Sensor according to Claim 4, **characterized in that** the coupling part (4, 5) has three magnets (17) which are arranged offset through an angle of 120° with respect to the longitudinal axis (LAT) of the sensor.

6. Sensor according to Claim 4, **characterized in that** the coupling part (4, 5) has a ring magnet (61, 62).

7. Sensor according to any one of Claims 1 to 6, **characterized in that** the optical waveguide protection element is bellows (26).

8. Sensor according to any one of Claims 1 to 6, **characterized in that** the optical waveguide protection element is a spring (51) prestressed in tension.

9. Sensor according to any one of Claims 6 to 8, **characterized in that** the sensor protection coupling (3) is designed to couple itself again automatically.

10. Sensor according to any one of the preceding claims, **characterized in that** the coupling parts (4, 5) of the sensor protection coupling (3) rest on one another via a three-point bearing (18).

11. Sensor according to any one of Claims 1 to 10, **characterized in that** the optical waveguide (7) is a monomode fiber.

12. Sensor according to any one of Claims 1 to 10, **characterized in that** the optical waveguide (7) is a multimode fiber.

## Revendications

1. Capteur optique avec protection anticollision pour une machine de mesure, en particulier pour une machine de mesure de coordonnées, comprenant une partie d'accouplement, située côté capteur, pour assurer la liaison mécanique et optique avec la machine de mesure, et un élément formant capteur (2), **caractérisé en ce que** le capteur présente un accouplement de protection de capteur (3) faisant office de protection anticollision, avec une partie d'accouplement (4) située côté machine de mesure et une partie d'accouplement (5) située côté élément formant capteur, un guide d'onde optique (7) étant guidé entre les parties d'accouplement (4, 5) de l'accouplement de protection de capteur (3), et un élément de protection de guide d'onde optique (26, 51) entourant le guide d'onde optique (7), les extrémités (27, 28, 52, 53) de l'élément de protection de guide d'onde optique (26, 51) étant fixées aux parties d'accouplements (4, 5) associées de l'accouplement de protection de capteur (3).

2. Capteur selon la revendication 1, **caractérisé en ce que** l'accouplement de protection de capteur (3) comprend un capteur de détachement (35).

3. Capteur selon la revendication 2, **caractérisé en ce que** le capteur de détachement (35) est réalisé sous la forme de contact à tige de nature inductive, capacitive, optique ou électrique.

4. Capteur selon l'une des revendications précédentes, **caractérisé en ce qu'**une partie d'accouplement (4, 5) de l'accouplement de protection de capteur (3) présente au moins un aimant (17), de préférence un électroaimant.

5. Capteur selon la revendication 4, **caractérisé en ce que** la partie d'accouplement (4, 5) présente trois aimants (17), décalés d'un angle de 120° par rapport à l'axe longitudinal (LAT) du capteur.

6. Capteur selon la revendication 4, **caractérisé en ce que** la partie d'accouplement (4, 5) présente un aimant annulaire (61, 62).

7. Capteur selon l'une des revendications 1 à 6, **caractérisé en ce que** l'élément de protection de guide d'onde optique est un soufflet de protection (26).

8. Capteur selon l'une des revendications 1 à 6, **caractérisé en ce que** l'élément de protection de guide d'onde optique est un ressort (51) précontraint sous traction.

9. Capteur selon l'une des revendications 6 à 8, **caractérisé en ce que** l'accouplement de protection de capteur (3) est réalisé pour se réaccoupler automatiquement.

10. Capteur selon l'une des revendications précédentes, **caractérisé en ce que** les parties d'accouplement (4, 5) de l'accouplement de protection de capteur (3) appuient les unes sur les autres par l'intermédiaire d'un montage en trois points.

11. Capteur selon l'une des revendications 1 à 10, **caractérisé en ce que** le guide d'onde optique (7) est une fibre monomode.

12. Capteur selon l'une des revendications 1 à 10, **caractérisé en ce que** le guide d'onde optique (7) est une fibre multimode.
